# EUROPEAN PATENT SPECIFICATION

(11) **EP 2 247 226 B1**
(45) Date of publication and mention of the grant of the patent: **26.08.2015**
(21) Application number: 09707571.7
(22) Date of filing: 03.02.2009
(51) Int. Cl.: A47G 21/06, A22C 29/02

(54) **SHELLFISH PLIERS**
KRUSTENTIERZANGE
PINCES À FRUITS DE MER

(30) Priority: 05.02.2008 SE 0800264
(43) Date of publication of application: 10.11.2010
(73) Proprietor: Von Schoultz, Erik, 118 52 Stockholm (SE)
(72) Inventor: Von Schoultz, Erik, 118 52 Stockholm (SE)
(74) Representative: Johansson, Lars E.
(86) International application number: PCT/SE2009/050106
(87) International publication number: WO 2009/099387

(56) References cited:
- FR-A1- 2 578 161
- GB-A- 2 331 916
- US-A- 1 123 852
- US-A- 1 626 905
- US-A- 3 685 097
- US-A- 4 397 087
- US-A- 6 019 673
- US-A1- 2005 282 481
- US-A1- 2005 282 481
- US-B1- 6 817 937

## Description

### FIELD OF THE INVENTION

The present invention relates to hand-held shellfish pliers, comprising a first handle, a second handle, first jaw and second jaw, wherein said first jaw is arranged on one of said handles and wherein there is arranged a pivot point for interaction between the handles, and wherein the jaws form a converging gap, presenting an opening in the diverging extension of said gap.

### BACKGROUND OF THE INVENTION

It is known that the shells of crustaceans, such as lobster, crabs or clams, must be broken in order to access the meat inside. The shells are often quite hard, and the use of some kind of tool is therefore required. Since the opening of the shellfish generally takes place at the table during the meal, the tool should be handheld and easy to use.

A handheld shellfish-opening tool is shown in US 6,817,937B1, where an upper and a lower handle are connected at a pivot at the far end, and segments of the handles forming a serrated jaw area are present next to the pivot. The tool can be operated by gripping the other end of the handles and pressing them together, such that that part of the shellfish which is placed between the jaw segments of each handle is cracked. While pressing the handles together, the user generally applies as much force as is needed to crack the shell, and the force is propagated along the handles. Since the jaw segment is close to the part of the handles where the force is applied, however, the possible lever is short and the force must be great in order to break the shell. With so great a force it is difficult for the user to control the process, and often the result is that after the shell is broken, the applied force makes the meat, juice and fragments of the shell spray over the surrounding area and sometimes even the user.

US 6,019,673 shows a handheld crab cracker where a pair of handles are connected at a pivot, and the handles on the other side of the pivot form a pair of jaws for cracking the shell of shellfish. Here, the handles are bent so that the jaws cannot close completely, and thus the meat of the shellfish is kept intact after the shell itself is broken. It is still a problem, however, that shell fragments and the juices inside can spray over the surrounding area when the shell is cracked. Also, the force needed to crack the shells is large, since the lever used for transmitting the power to the jaws is short.

GB 2331916 shows a nut cracker comprises epicyclic gearing for transmitting an amplified force from pivotally-interconnected hand levers to a nut-contacting pivotally mounted tongue and nut-breaking blade.

A common problem with tools of this kind is that the eating of shellfish is a generally messy procedure, where the meat, juice and shell fragments of the shellfish are spread over a larger area, including the tool itself. The need for cleaning the tool after use is thus great, but when the different parts of the tool is not easily separable, as is the case for the tools mentioned above, the cleaning process can be cumbersome and unsatisfactory.

### BRIEF DESCRIPTION OF THE INVENTION

The object of the invention is to provide hand-held shellfish pliers where there is a multiple lever structure where the force applied to the handles is geared via fulcrum points in order to magnify said force. Thereby, a maximum of effective force is achieved at the closing of the jaws, which facilitates the operation of the device and makes it possible to achieve a desired result without uncommon strength or technique being required from the user.

Another aspect of the invention is to provide handheld shellfish pliers which comprise at least two, preferably three, parts which can be demounted. Thereby, the pliers can easily be handled and kept clean.

Another aspect of the invention is to provide handheld shellfish pliers which in one of the handles and/or the jaw section comprise a resilient structure which is arranged to urge the jaws into their open state. Thereby, the closing movement of the jaws can be controlled to a greater extent and allows for more control over the process of cracking the shell of the shellfish.

Another aspect of the invention is to provide handheld shellfish pliers where a portion of the jaw section protrudes in the direction away from the jaws and is arranged to interact with at least a part of one of the handles. Thereby, the resilient structure mentioned above can be coupled between the jaw section and the handle, where the resiliency resides mainly in a portion of the jaw section or in one of the handles.

Another aspect of the invention is to provide handheld shellfish pliers which are arranged to be separable into at least two parts, preferably without any need of tools. Thereby, demounting the device becomes increasingly simple and can be performed by the user without the need for any special skill or excessive training.

Another aspect of the invention is to provide handheld shellfish pliers where the jaw structure is attached to the second handle at a fixed jaw structure pivot point. Thereby, the jaw section can pivot around this point, thus focusing the movement entirely to the area where it is required, i.e. the closing of the jaws, without risking that the whole jaw section slides when pressure is applied.

Another aspect of the invention is to provide handheld shellfish pliers where the width of the first jaw is larger than the width of the second jaw. Thereby, the wider upper jaw prevents the meats or fluids of the shellfish from spraying upwards during use, which would risk staining the surrounding area or even the user. Instead, any spray can be focussed downwards towards the table or the plate.

Another aspect of the invention is to provide handheld shellfish pliers where the first handle is arranged with a slit and the second handle is also arranged with a slit, both of these in turn arranged to allow a jaw section activation part to extend therethrough. Thereby, the jaw section can be mounted through the handles and kept in place by them, which allows for convenient operation of the device without the need for further parts for locking or controlling the jaw section.

Another aspect of the invention is to provide handheld shellfish pliers where the first handle and the jaw section are interconnected by means of at least one protrusion on one of said first handle or second handle and jaw section interacting with a cavity in the other. Thereby, the pieces of the shellfish pliers are fixed together in the desired way. Preferably, said cavity could be a through hole.

Another aspect of the invention is to provide handheld shellfish pliers where more than one cavity are arranged for interconnecting the first handle with the jaw section, thus allowing for varying the length of the lever in order to vary the magnitude of the force needed to move the jaws. Thereby, a "higher gear" is made available for breaking open unusually hard shellfish shells, where the pliers can be mounted in an alternative way to couple more force from the handles to closing jaws.

Another aspect of the invention is to provide a method for operating handheld shellfish pliers where the changes ΔT, ΔD of the distance T between the gripping parts of the handles and the distance D between the jaws are such that the quotient ΔT/ΔD during use of the pliers is larger than 1. Thereby, the force applied to the handles is magnified during operation and results in a smaller movement in the closing of the jaws than at the closing of the handles, which means that the closing force thanks to the lever construction is larger at the jaws than at the handles.

### BRIEF DESCRIPTION OF THE DRAWINGS

Other aspects, uses and advantages of this invention will be apparent from the reading of this description which proceeds with reference to the accompanying drawings forming part thereof and wherein:
- Fig. 1: shows a perspective view of a preferred embodiment of the invention,
- Fig. 2: shows a perspective view of the separate parts of the preferred embodiment of the invention,
- Fig.: 3 shows a side view of the preferred embodiment of the invention, and
- Fig. 4: shows the preferred embodiment of the invention during use,
- Fig. 5: shows a front view of the preferred embodiment of the invention,
- Fig. 6: shows a second embodiment of the invention,
- Fig. 7: shows the embodiment of Fig. 6 during use, and
- Fig. 8: shows a third embodiment of the invention.

### DETAILED DESCRIPTION OF THE INVENTION

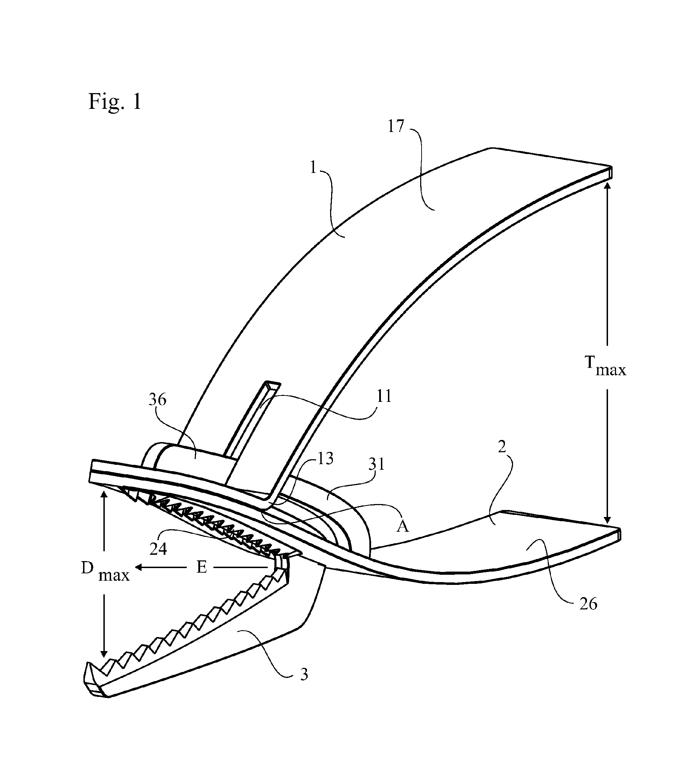

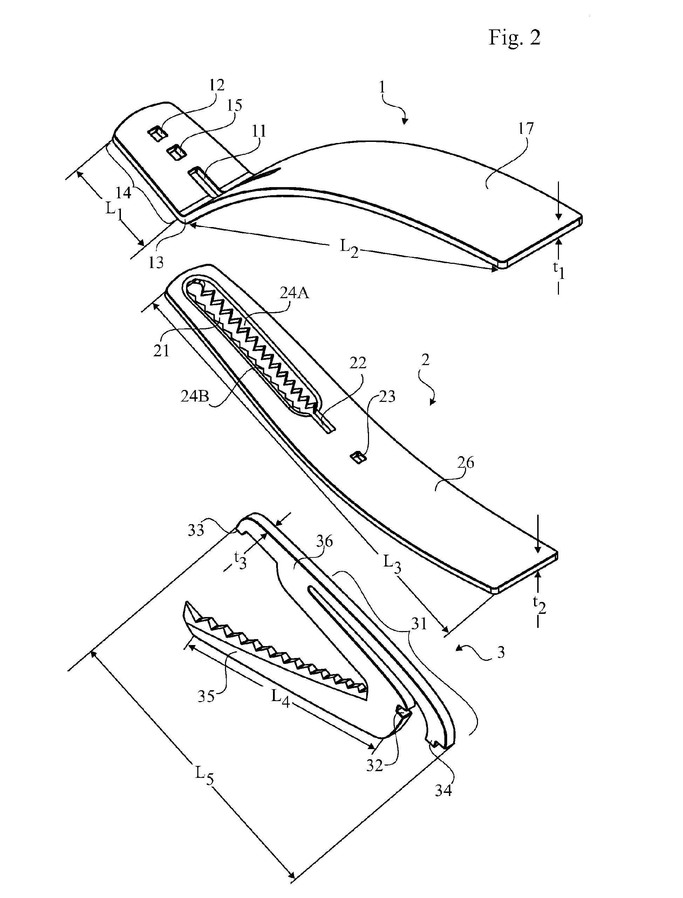

With reference to Fig. 1 and Fig. 2, the construction and mounting of the invention will now be described. A first handle 1, a second handle 2 and a jaw section 3 are joined to form handheld shellfish pliers. In order to put the pieces together, the jaw section activation part 36 is put through the jaw opening 21 of the second handle 2 and the slit 11 of the first handle, and the lock is achieved by the notch 32 being placed in the corresponding incision, the fixed jaw structure pivot point 22, of the second handle 2, and the first end portion 33 and second end portion 34 being fixed into the cavities 12 in the first handle 1 and 23 of the second handle 2, respectively.

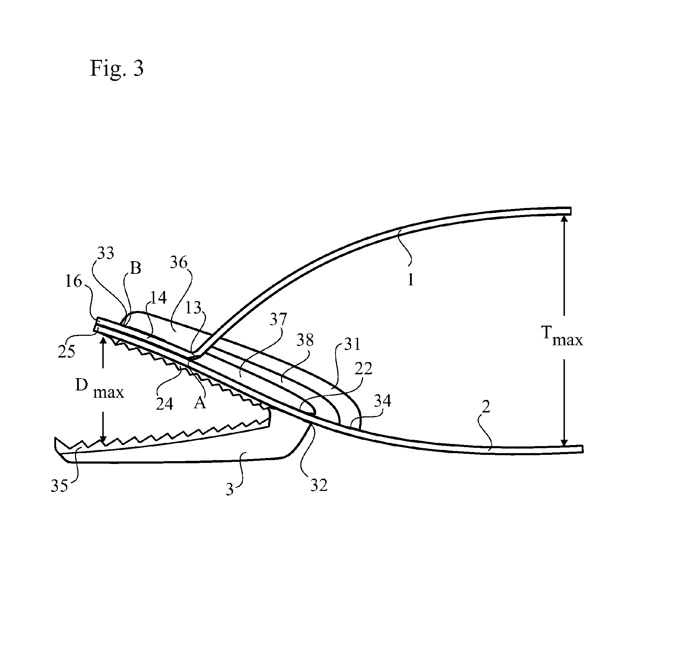

Fig. 3 shows the shellfish pliers fully assembled. The handles 1, 2 are arranged to be gripped at their gripping parts 17, 26, and the jaws are formed by the upper jaw 24 of the lower handle 2 and the lower jaw 35 of the jaw section 3. The handles 1, 2 are held in position by the jaw section activation part, at whose first end portion 33 a fixed pivot point B is achieved by the insertion of the end portion 33 into the cavity 12, and by the resilient structure 31 at whose end the second end portion 34 is inserted into the cavity 23. The front part 14 of the first handle is placed against the front part of the second handle 2 on top of the frontmost part of the upper jaws 24, and the contact between these areas of the handles ends in the active surface 13A of the edge 13 of the upper handle, where a non-fixed pivot point A is formed. A non-fixed pivot point is a pivot point where the parts of the shellfish pliers can slide or roll with respect to each other.

Between the jaws 24, 35, a gap with the opening Dₘₐₓ is formed. A direction along the extension E of the gap can be defined and is indicated by the arrow in Fig. 1.

The jaw section 3 with the jaw 35 and an upper structure 37 is made to be stiff, which is beneficial for the operation of the shellfish pliers and facilitates the use of a multiple lever structure in the pliers.

Thanks to the rigidity and form of the pieces of the invention, a tension is achieved in the resilient structure 31 and the jaw section activation part 36 between the end point 33, which is fastened in the upper handle, and the end point 34, which is fastened in the lower handle. This tension keeps the device together and also plays an beneficial part in the operation of the device, which will be described in detail below.

The pieces of the shellfish pliers are in this preferred embodiment made of a stainless steel which is easy to clean and performs the operation of the invention in a reliable manner. The steel is also a durable material and can withstand the effects of the forces needed to break different kinds of shells where some may be harder than others. The handles have a thickness t₁ and t₂, indicated in Fig. 2, of 2,0 mm - 3,0 mm, preferably 2,5 mm, and the jaw section has a thickness t₃ of 3,0 - 4,0 mm, preferably 3,6 mm. The length L₁ of the forward part 14 of the first handle 1 is about 35 mm, and the length L₂ of the rest of the first handle 1 is about 120 mm. The length L₃ of the second handle 2 is about 175 mm, and on the jaw section 3, the length L₄ of the lower jaw 35 is about 90 mm and the length L₅ of the upper part, with the jaw section activation part 36 and the resilient structure 31, is about 90 mm.

It is beneficial that the device easily can be taken apart and put together again, to allow for easy and effective cleaning. Since shellfish leftovers are prone to turning bad after some time and can cause food poisoning, it is an especially beneficial feature that the device can be cleaned after each meal.

Operation of the device is achieved by gripping the gripping parts 17, 26 of the handles 1 and 2 with one hand and pressing them together. The shape of the handles is designed to give the user an ergonomic grip and a balanced impression of the device. It is also advantageous that the second handle is wide enough to make it possible to put the pliers down into a standing position next to the plate at the meal, since this makes them easy to grip the next time the user wishes to use the device.

When the handles 1 and 2 are thus pressed together, the non-fixedly arranged pivot point A of the active surface 13A of the edge 13 acts as a fulcrum and the torque is transmitted towards the forward part 14 of the first handle 1, where the end portion 33 of the jaw section 3 is fastened in the cavity 12, resulting in the end portion 33 of the resilient structure 31 being forced upwards by the forward part 14. The upper structure 37 of the jaw structure 3 now acts as a second lever, transmitting the applied force to the pivot point 22 of the second handle 2. The result is that the jaw section 3 is forced upwards while the second handle 2 with the upper jaw 24 is held still, resulting in a closing of the jaws 24, 35. Thanks to the lever system, the force applied by the user pressing the handles together is magnified, resulting in the shellfish being placed between the jaws 24, 35 being subjected to a maximum efficient force necessary for breaking the shell. The pivot point A of the active surface 13A slides along the top of the second handle 2 to an end position A', and the resilient structure 31 acts as a spring, trying to force the jaws back apart. Thus, when the shellfish shell begins to break and the user decreases the applied force, the jaws are moved apart by the construction itself rather than by the user, which allows for easy operation of the pliers and gets them ready for cracking the shellfish again, perhaps in a different place.

Thus, the initial force which must be applied by the user is smaller than the force needed in other handheld devices used for cracking shellfish, which allows for greater control over the process and easier adjustment in the magnitude of the force by the user. When the shell begins to crack the user can, thanks to this level of control, lower the magnitude of the force applied and thus preserve the meat inside the shell. This also lowers the risk of unwanted damage to the meat of the shellfish or of spraying the contents of the shell across a larger area.

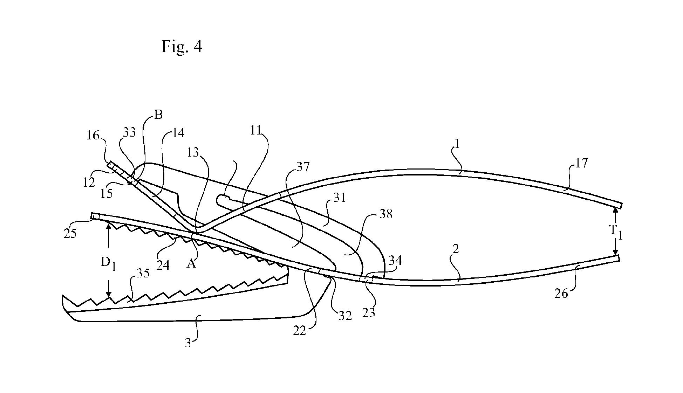

The distance between the upper handle 1 and the lower handle 2 at the gripping parts 17, 26 is shown in Fig. 3 and denoted by Tₘₐₓ, and Fig. 4 shows the now decreased distance between the same parts during operation of the pliers, denoted by T₁. In a similar fashion, the maximum distance Dₘₐₓ and the distance during operation D₁ of the jaws 24, 35 are shown in Fig. 3 and 4, respectively. The differences ΔT and ΔD are defined such that ΔT = Tₘₐₓ - T₁ and ΔD = Dₘₐₓ - D₁. During operation of the device, the lever system and the coupling of the force applied to the handles act in such a way that the relation ΔT/ ΔD >1 always holds.

It can be noted that the jaws 24, 35 are never completely closed during operation of the shellfish pliers, so that the relation D₁ > 0 always holds for the distance D₁ shown in Fig. 4. Thus the complete crushing of the shellfish and the meat inside is avoided. A situation might otherwise arise where the shell is broken and embedded in the meat in such a way that the use must separate every fragment of the shell from the meat before eating, or indeed entirely discard the meat as inedible due to its high content of shell fragments.

If very hard shellfish are to be broken by the device, it is possible that more force is needed. The shellfish pliers can then be varied to allow for greater transmission of the force applied by the user. In putting the device together, the end portion 33 of the jaw section activation part 36 is placed into the cavity 15 rather than the cavity 12 of the first handle. The section of the forward part 14 acting in the transmission of the torque is thus shortened, making the force transmitted to the upper structure 37 even greater. Thus, the user can break even harder shellfish without needing to apply greater force at the handles, and can keep a greater level of control over the process.

The slit 11 in the upper handle 1 is long enough to allow for a full closure of the jaws 24, 35 without the upper end of the slit 11 coming into contact with the resilient structure 31 which would otherwise hinder the operation of the pliers.

The notch 32 which is put into the incision 22 acts as a pivot point in the operation of the device, keeping this end of the jaw section 3 firmly pressed against the back end of the incision 22 in the second handle 2. Thus, the risk of deforming the device during use is lowered and a full transmission of the applied force is possible.

In Fig. 3, a side view of this embodiment of the invention is shown with the pieces put together and ready for use. It can be seen that the jaw section 3 is placed in the standard way with the end 33 portion being inserted into the cavity 12 rather than the cavity 15, since the edges 16, 25 of the first handle 1 match. If the cavity 15 had been used, the edge 16 would protrude, since this would mean that the whole of the first handle 1 had been moved to the left in Fig. 3.

In this figure, the workings of the levers can be clearly seen. When a force is applied to the handle 1 at the right-hand side, non-fixedly arranged pivot point A of the edge 13 acts as a sliding fulcrum and slides towards the a position A' which corresponds to the handles being fully closed, and the torque is transmitted along the left part 14 to the end portion 33 of the jaw section activation part 36. The resulting force presses the end portion 33 upwards which in turn forces the lower jaw 35 upwards. The notch 32 is all the while firmly pressed against the incision 22, keeping the inner end of the jaw section 3 in place and acting as a pivot for the resulting movement of the lower jaw 35. Since the second handle 2 with its upper jaw 24 is thus pressed downwards by the end portion 34 of the resilient structure 31 as well as by the active surface 13A of the edge 13 of the first handle, while the lower jaw 35 thanks to the resulting force upwards on the end portion 33 is pressed upwards, a closure of the jaws 24, 35 is achieved.

During this operation, force is loaded into the resilient structure 31 and the gap 38 between the resilient structure 31 and the upper part 37 of the jaw section is widened slightly. When the force pressing the handles 1, 2 together is lessened or removed, the resilient structure 31 strives to return to its original position, thus forcing the jaws apart again. Thereby, the user can focus on the force needed for closing the jaws, rather than applying additional force for pulling the handles apart after a crack is achieved.

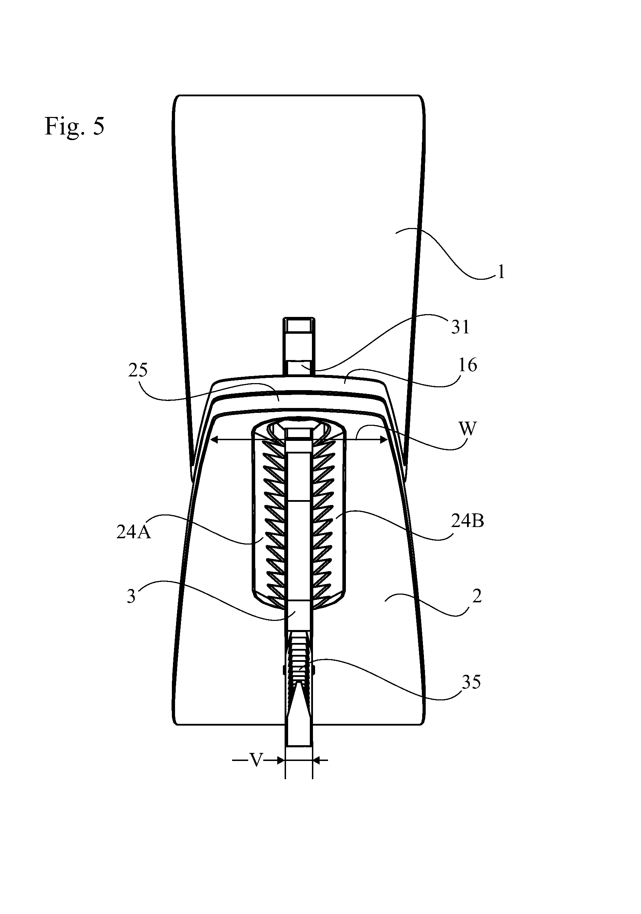

In Fig. 5, a view of the open jaws of the device is shown from the jaw end, i.e. the lefthand side of Fig. 3. The upper jaws 24A, 24B of the second handle 2 are shown, as well as the lower jaw 35 of the jaw section 3. The matching edges 16, 25 of the handles are also shown, as well as a glimpse of the resilient structure 31. The width of the second handle 2 at the jaw is denoted by W, whereas the width of the lower jaw 35 of the jaw section 3 is denoted by V. It can be noted that W » V, and the advantages of this relation will be described further below.

The upper jaws 24A and 24B are tilted downwards for two important reasons. Firstly, the opening 21 which is formed between the jagged jaws 24A and 24B makes it possible to insert the jaw section activation part 36 of the jaw section 3 and thus put the pieces of the invention together in such a way that it can be used to open shellfish. Secondly, the jaws formed by the jagged upper jaws 24A and 24B and the lower jaw 35 have a triangular shape where the top is substantially wider than the bottom. This allows for a more controlled breaking of the shells with less risk of shattering the shellfish. If, however, the shell should break in a manner which causes a spray of shell fragments, shellfish meat or juices, the direction of this spray would be downwards, towards the platter of the user where less damage is caused than if the direction of the spray is random and could hit a wider area, including the user and other persons nearby. The width W of the lower handle 2 at the upper jaw 24, which is substantially larger than the width V of the lower jaw 35 of the jaw section, further increases this advantage.

The jaws 24A, 24B, 35 are jagged to keep the shellfish in place and to easier break the shell, since the force pressing the jaws together is focussed on the points of the jagged areas, which are also in contact with the shellfish.

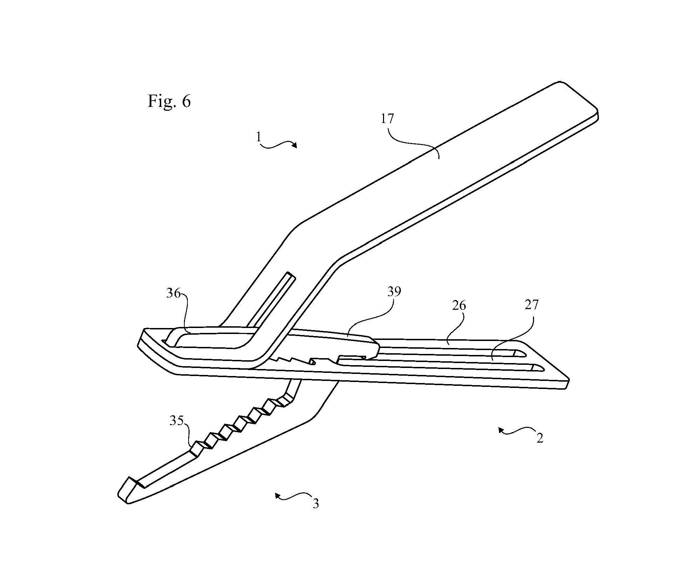

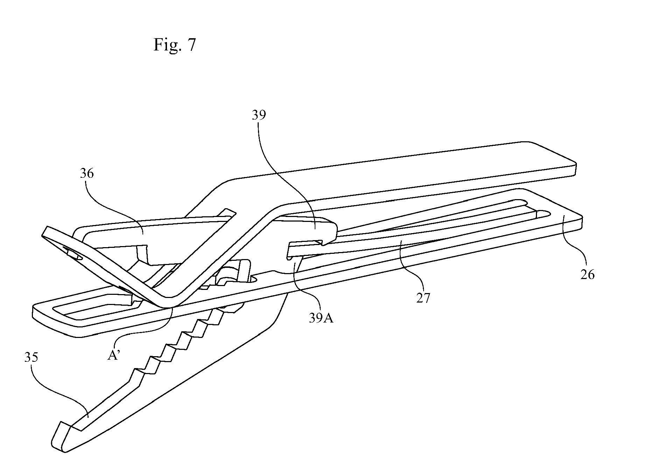

In Fig. 6 a second embodiment of the invention is shown, and in Fig. 7 this embodiment is shown during use of the shellfish pliers. Here, the resilient structure (formerly denoted by 31), is placed in the lower handle 2 and denoted by 27. A backwards extending part 39 of the jaw section 3 is attached to the resilient structure 27 and the resilient structure 27 is secured by the indention 39A shown in Fig. 7. When the handles 1, 2 are pressed together at the gripping parts 17, 26, the pivot point A again acts as a sliding fulcrum, coupling the force applied to the jaw section activation part 36 which now acts as a second lever around the fulcrum at an incision 22. The other end of this lever is the backwards extending part 39, and the force is loaded into the resilient structure 27 while the lower jaw 35 is forced upwards, thus closing the jaws. When the pressure on the gripping parts 17, 26 of the handles is lessened, the resilient structure 27 strives towards its original position, thus opening the jaws again.

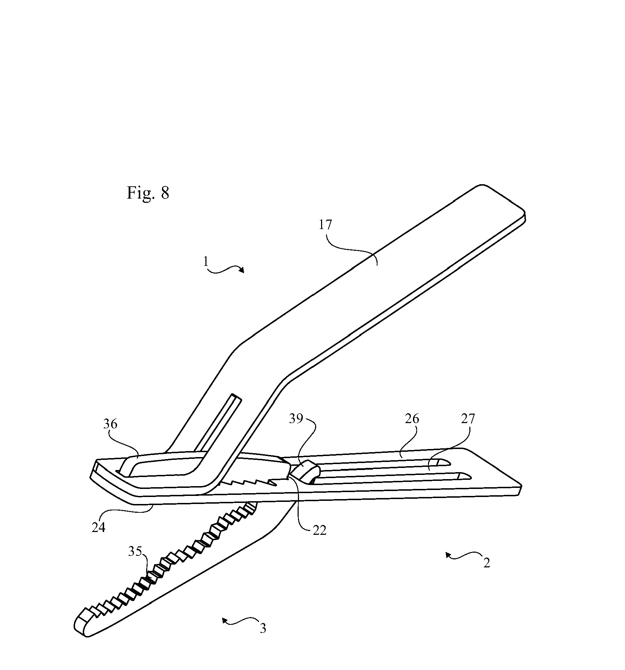

Fig. 8 shows a third embodiment of the invention, where the jaw section 3 is attached to the second handle 2 at a pivot point 22. A resilient structure 27 is located in the second handle 2 and a backwards extending part 39 engages the resilient structure 27 in such a way that a pressing together of the handles 1, 2 results in the lower jaw 35 being moved towards the lower jaw 24 and the backwards extending part 39 being moved downwards, thus loading the force into the resilient structure 27. In this embodiment, the jaw section 3 can move relative to a pivot point 22 which is held immobile.

The skilled person realises that the invention is not limited by the embodiment described above, but that many changes may be made within the scope defined by the appended claims. One realises for instance that resiliency could be achieved by a combination of the jaw section and one of the handles, rather than by one or the other. Different materials or materials of different dimensions could be used, and the shape of the handles could be varied to achieve different levels of ergonomy or stability. The resilient structure could also be longer or shorter and function in a different way in the shellfish pliers. It is even possible that the resilient structure could be separate piece of the construction, for instance a separate spring. The pivot point at the notch 32 could also be secured in a different way, or the parts of the shellfish pliers could be fastened together in such a way that separating them could not be done in an easy way. The pliers could be manufactured by any suitable method, for instance by punching or fine-blanking.

## Claims

1. Hand-held shellfish pliers, comprising a first handle (1), a second handle (2), first jaw (24) and second jaw (35), wherein said first jaw (24) is arranged on one of said handles (1, 2), and wherein there is arranged a pivot point (A) for interaction between the handles (1, 2), and wherein the jaws (24, 35) form a converging gap, presenting an opening (Dₘₐₓ) in the diverging extension (E) of said gap, and there is a multiple lever structure where the force applied to the handles (1, 2) is geared via fulcrum points (A, B) in order to magnify said force, **characterized in that** at least one of said handles (1, 2) is arranged with a slit (11, 21), arranged to allow a jaw section activation part (36) to extend therethrough.

2. Hand-held shellfish pliers according to claim 1, **characterized in that** the one of the handles (1, 2) and/or the jaw section (3) comprises a resilient structure which is arranged to urge the jaws into their open state.

3. Hand-held shellfish pliers according to claim 1, **characterized in that** the pliers comprise three separate parts; a first handle (1), a second handle (2) and a jaw section (3).

4. Hand- held shellfish pliers according to claim 2 or 3, **characterized in that** a portion (31) on the jaw section (3) protrudes in the direction away from the converging gap of the jaws (35, 24) and is arranged to interact with at least a part (23) of one of the handles (1, 2).

5. Hand-held shellfish pliers according to claim 4, **characterized in that** the resiliency is mainly achieved by said protruding portion (31).

6. Hand-held shellfish pliers according to claim 4, **characterized in that** the resiliency is mainly achieved by a portion of one of the handles (1, 2).

7. Hand-held shellfish pliers according to claim 2 or 3, **characterized in that** the shellfish pliers (1, 2, 3) are arranged to be separable into at least two parts, preferably without any need of tools.

8. Hand-held shellfish pliers according to claim 3, **characterized in that** the jaw section (3) is attached to the second handle (2) at a fixed jaw structure pivot point (22).

9. Hand-held shellfish pliers according to any of the preceding claims, **characterized in that** the width (w) of the first jaw (24) is larger than the width (v) of the second jaw (35).

10. Hand-held shellfish pliers according to claim 3, **characterized in that** one of said handles (1, 2) and the jaw section (3) are interconnected by means of at least one protrusion on one of said handles (1, 2) and jaw section (3) interacting with a cavity in the other.

11. Hand-held shellfish pliers according to any of the preceding claims, **characterized in that** there is arranged a non-fixed pivot point (A) for interaction between the handles (1, 2).

12. Hand-held shellfish pliers according to claim 10, **characterized in that** said cavity is in the form of a through hole (12, 15, 23).

13. Hand-held shellfish pliers according to claim 10, **characterized in that** more than one cavity are arranged for interconnecting the first handle (1) with the jaw section (3), thus allowing for varying the length of the lever (14) in order to vary the magnitude of the force needed to move the jaws (24, 35).

14. Method for operating hand-held shellfish pliers according to claim 1, **characterized in that** the changes ΔT, ΔD of the distance T between the gripping parts (17, 26) of the handles (1, 2) and the distance D between the jaws (24, 35) are such that the quotient ΔT/ΔD during use of the pliers is larger than 1.

## Patentansprüche

1. Handgeführte Schalentier-Zange, umfassend einen ersten Griff (1), einen zweiten Griff (2), eine erste Backe (24) und eine zweite Backe (35), wobei die erste Backe (24) an einem der Griffe (1, 2) eingerichtet ist, und wobei ein Schwenkpunkt (A) für ein Zusammenwirken der Griffe (1, 2) eingerichtet ist, und wobei die Backen (24, 35) einen zusammenlaufenden Spalt bilden, der eine Öffnung (Dₘₐₓ) in der auseinanderlaufenden Erstreckung (E) des Spalts darstellt, und wobei eine Mehrfach-Hebelstruktur vorhanden ist, in der eine auf die Griffe (1, 2) aufgewendete Kraft über Hebelpunkte (A, B) übersetzt wird, um die Kraft zu verstärken,
**dadurch gekennzeichnet, dass**
mindestens einer der Griffe (1, 2) mit einem Schlitz (11, 21) eingerichtet ist, der dazu eingerichtet ist, es einem Backenteilstück-Aktivierungsteil (36) zu ermöglichen, sich dort hindurch zu erstrecken.

2. Handgeführte Schalentier-Zange nach Anspruch 1, **dadurch gekennzeichnet, dass** einer der Griffe (1, 2) und/oder das Backenteilstück (3) eine elastische Struktur umfasst, die dazu eingerichtet ist, die Backen in deren offene Stellung zu drücken.

3. Handgeführte Schalentier-Zange nach Anspruch 1, **dadurch gekennzeichnet, dass** die Zange drei separate Teile umfasst; einen ersten Griff (1), einen zweiten Griff (2) und ein Backenteilstück (3).

4. Handgeführte Schalentier-Zange nach Anspruch 2 oder 3, **dadurch gekennzeichnet, dass** ein Abschnitt (31) an dem Backenteilstück (3) in der Richtung weg von dem zusammenlaufenden Spalt der Backen (35, 24) vorragt und dazu eingerichtet ist, mit mindestens einem Teil (23) eines der Griffe (1, 2) zusammenzuwirken.

5. Handgeführte Schalentier-Zange nach Anspruch 4, **dadurch gekennzeichnet, dass** die Elastizität hauptsächlich durch den vorragenden Abschnitt (31) bewirkt wird.

6. Handgeführte Schalentier-Zange nach Anspruch 4, **dadurch gekennzeichnet, dass** die Elastizität hauptsächlich durch einen Abschnitt eines der Griffe (1, 2) bewirkt wird.

7. Handgeführte Schalentier-Zange nach Anspruch 2 oder 3, **dadurch gekennzeichnet, dass** die Schalentier-Zange (1, 2, 3) dazu eingerichtet ist, in mindestens zwei Teile auftrennbar zu sein, bevorzugt ohne den Bedarf an irgendwelchen Werkzeugen.

8. Handgeführte Schalentier-Zange nach Anspruch 3, **dadurch gekennzeichnet, dass** das Backenteilstück (3) an dem zweiten Griff (2) an einem Schwenkpunkt (22) der festen Backenstruktur angebracht ist.

9. Handgeführte Schalentier-Zange nach einem der vorhergehenden Ansprüche, **dadurch gekennzeichnet, dass** die Breite (w) der ersten Backe (24) größer ist als die Breite (v) der zweiten Backe (35) ist.

10. Handgeführte Schalentier-Zange nach Anspruch 3, **dadurch gekennzeichnet, dass** einer der Griffe (1, 2) und das Backenteilstück (3) miteinander verbunden sind, indem ein Vorsprung an einem der Griffe (1, 2) und dem Backenteilstück (3) mit einer Aussparung in dem anderen zusammenwirkt.

11. Handgeführte Schalentier-Zange nach einem der vorhergehenden Ansprüche, **dadurch gekennzeichnet, dass** ein nicht-fester Schwenkpunkt (A) für das Zusammenwirken zwischen den Griffen (1, 2) eingerichtet ist.

12. Handgeführte Schalentier-Zange nach Anspruch 10, **dadurch gekennzeichnet, dass** die Aussparung in der Form eines Durchgangslochs (12, 15, 23) vorliegt.

13. Handgeführte Schalentier-Zange nach Anspruch 10, **dadurch gekennzeichnet, dass** mehr als eine Aussparung eingerichtet ist, um den ersten Griff (1) mit dem Backenteilstück (3) zu verbinden, wodurch es ermöglicht wird, die Länge des Hebels (14) zu variieren, um den Betrag der Kraft zu variieren, die benötigt wird, um die Backen (24, 35) zu bewegen.

14. Verfahren zum Bedienen der handgeführten Schalentier-Zange nach Anspruch 1, **dadurch gekennzeichnet, dass** die Änderungen ΔT, ΔD der Entfernung T zwischen den Greifteilen (17, 26) der Griffe (1, 2) und der Entfernung D zwischen den Backen (24, 35) derart beschaffen sind, dass der Quotient ΔT/ΔD während der Verwendung der Zange größer als 1 ist.

## Revendications

1. Pince à coquillages actionnable à la main, comprenant une première poignée (1), une deuxième poignée (2), première mâchoire (24) et une deuxième mâchoire (35), dans laquelle ladite première mâchoire (24) est agencée sur l'une desdites poignées (1, 2), dans laquelle est agencé un point de pivotement (A) pour une interaction entre les poignées (1, 2), et dans laquelle les mâchoires (24, 35) forment un espace convergent, présentant une ouverture (Dₘₐₓ) dans l'extension divergente (E) dudit espace, et il existe une structure de levier multiplicateur dans lequel la force exercée sur les poignées (1, 2) est transmise via des points de pivotement (A, B) afin d'amplifier ladite force, **caractérisée en ce qu'**au moins une desdites poignées (1, 2) présente une fente (11, 21) agencée pour permettre à une partie d'activation (36) d'une portion formant mâchoire de s'étendre à travers elle.

2. Pince à coquillages actionnable à la main selon la revendication 1, **caractérisée en ce que** l'une des poignées (1, 2) et / ou la portion formant mâchoire (3) comprend une structure élastique qui est agencée pour solliciter les mâchoires dans leur état d'ouverture.

3. Pince à coquillages actionnable à la main selon la revendication 1, **caractérisée en ce que** les pinces comprennent trois parties distinctes ; une première poignée (1), une deuxième poignée (2) et une portion formant mâchoire (3).

4. Pince à coquillages actionnable à la main selon la revendication 2 ou la revendication 3, **caractérisée en ce qu'**une partie (31) sur la portion formant mâchoire (3) fait saillie dans la direction opposée à l'espace convergeant des mâchoires (35, 24) et est agencée pour interagir avec au moins une partie (23) de l'une des poignées (1, 2).

5. Pince à coquillages actionnable à la main selon la revendication 4, **caractérisée en ce que** l'élasticité est obtenue principalement par ladite partie (31) en saillie.

6. Pince à coquillages actionnable à la main selon la revendication 4, **caractérisée en ce que** l'élasticité est obtenue principalement par une portion de l'une des poignées (1, 2).

7. Pince à coquillages actionnable à la main selon la revendication 2 ou la revendication 3, **caractérisée en ce que** la pince à coquillages (1, 2, 3) est agencée de façon à être séparable en au moins deux parties, de préférence sans avoir besoin d'outils.

8. Pince à coquillages actionnable à la main selon la revendication 3, **caractérisée en ce que** la portion formant mâchoire (3) est fixée à la deuxième poignée (2) en un point de pivotement fixe (22) de la structure de mâchoire.

9. Pince à coquillages actionnable à la main selon l'une quelconque des revendications précédentes, **caractérisée en ce que** la largeur (w) de la première mâchoire (24) est plus importante que la largeur (v) de la deuxième mâchoire (35).

10. Pince à coquillages actionnable à la main selon la revendication 3, **caractérisée en ce que** l'une desdites poignées (1, 2) et la portion formant mâchoire (3) sont reliés entre elles au moyen d'au moins une saillie présente sur l'une desdites poignées (1, 2) et portion formant mâchoire (3), coopérant avec une cavité aménagée dans l'autre.

11. Pince à coquillages actionnable à la main selon l'une quelconque des revendications précédentes, **caractérisée en ce qu'**il est prévu un point de pivotement (A) non-fixe pour une interaction entre les poignées (1, 2).

12. Pince à coquillages actionnable à la main selon la revendication 10, **caractérisée en ce que** ladite cavité est sous la forme d'un trou traversant (12, 15, 23).

13. Pince à coquillages actionnable à la main selon la revendication 10, **caractérisée en ce que** plus d'une cavité est agencée pour interconnecter la première poignée (1) avec la portion formant mâchoire (3), permettant ainsi de faire varier la longueur du levier (14) afin de faire varier la grandeur de la force nécessaire pour déplacer les mâchoires (24, 35).

14. Procédé de fonctionnement d'une pince à coquillages actionnable à la main selon la revendication 1, **caractérisé en ce que** les modifications ΔT, ΔD de la distance T entre les parties de préhension (17, 26) des poignées (1, 2) et la distance D entre les mâchoires (24, 35) sont telles que le quotient ΔT/ΔD durant l'utilisation de la pince est supérieur à 1.
